# EUROPEAN PATENT SPECIFICATION

(11) **EP 4 586 367 B1**
(45) Date of publication and mention of the grant of the patent: **26.08.2026**
(21) Application number: 25179148.9
(22) Date of filing: 03.09.2021
(51) Int. Cl.: H01M 50/20, H01M 10/6556, H01M 10/625, H01M 10/613

(54) **BATTERY PACK, VEHICLE, AND ELECTRONIC DEVICE COMPRISING SAME**
BATTERIEPACK, FAHRZEUG UND ELEKTRONISCHE VORRICHTUNG DAMIT
BLOC-BATTERIE, VÉHICULE ET DISPOSITIF ÉLECTRONIQUE LE COMPRENANT

(30) Priority: 04.09.2020 KR 20200113233
(43) Date of publication of application: 16.07.2025
(60) Divisional application: 26153336.8 / 4 760 904
(62) Document number(s) of the earlier application(s) in accordance with Art. 76 EPC: 21864739.4 / 4 068 480
(73) Proprietor: LG Energy Solution, Ltd., Seoul 07335 (KR)
(72) Inventor: JEON, Bo-Ra, 34122 DAEJEON (KR); HONG, Soon-Chang, 34122 DAEJEON (KR); KIM, Dong-Hyun, 34122 DAEJEON (KR); LEE, Hyoung-Suk, 34122 DAEJEON (KR)
(74) Representative: Plasseraud IP

(56) References cited:
- EP-A1- 3 261 153
- WO-A1-2019/169080
- CN-A- 111 525 054
- CN-U- 208 324 862
- DE-A1- 102016 110 330
- KR-A- 20200 033 774
- US-A1- 2020 198 453

## Description

### TECHNICAL FIELD

The present disclosure relates to a battery pack, a vehicle including the same and an electronic device including the battery pack, and more particularly, to a battery pack with increased safety against an external impact, an electronic device including the same, and a vehicle.

### BACKGROUND ART

Recently, as the demand for portable electronic products such as laptops, video cameras, mobile phones, etc. has rapidly increased, and the development of electric vehicles, energy storage batteries, robots, satellites, etc. begins in earnest, research on high-performance secondary batteries that are repeatedly chargeable and dischargeable is being actively researched.

Currently commercialized secondary batteries include nickel cadmium batteries, nickel hydrogen batteries, nickel zinc batteries, lithium secondary batteries, etc. Among these secondary batteries, because the lithium secondary batteries have almost no memory effect compared to nickel-based secondary batteries, the lithium secondary batteries have been spotlighted owing to advantages of free charging and discharging, a very low self-discharge rate, and a high energy density.

Such a lithium secondary battery mainly uses lithium-based oxides and carbon materials as positive electrode active materials and negative electrode active materials, respectively. The lithium secondary battery also includes an electrode assembly in which a positive electrode plate and a negative electrode plate on which a positive electrode active material and a negative electrode active material are respectively coated are arranged with a separator interposed therebetween, and a sheath material, that is, a battery case, that seals and accommodates the assembly together with an electrolyte solution.

In addition, according to a shape of the sheath material, lithium secondary batteries may be classified into a can-type secondary battery in which the electrode assembly is embedded in a metal can and a pouch-type secondary battery in which the electrode assembly is embedded in a pouch of an aluminum laminate sheet.

In particular, the demand for large-capacity battery packs applied to electric vehicles, etc. has recently increased. In such a large-capacity battery pack mounted on a vehicle, when the vehicle collides with an external object, the impact may be transmitted to even a battery pack inside the vehicle body. When such a large impact occurs to the battery pack, a plurality of battery modules may be damaged and short-circuited with external components, or short-circuited from each other, and thus there is a high risk of explosion of the battery module or outbreak of fire.

Accordingly, a technology capable of safely protecting a plurality of battery modules mounted on a battery pack from external impact has recently emerged as an important factor.

KR 2020 0033774 discloses a battery case of an electric car. WO 2019/169080 discloses a cooling system integrated with vehicle battery tray. EP 3 261 153 A1 discloses a secondary battery pack.

DE 10 2016 110330 A1 discloses an housing for a vehicle battery. CN 208 324 862 U discloses a battery shell. CN 111 505 054 A discloses a battery carrier assembly. US 2020/198453 A1 discloses a battery housing for a vehicle battery

### DISCLOSURE

### Technical Problem

The present disclosure is designed to solve the problems of the related art, and therefore the present disclosure is directed to providing a battery pack with increased safety against an external impact, an electronic device including the same, and a vehicle.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack including a plurality of battery modules; a base plate on which the plurality of battery modules are located; a front frame including a front cover portion covering a front of the base plate and a front plate portion extending rearward from one side of the front cover portion, wherein the front cover portion and the front plate portion are integrally formed; a rear frame having a rear cover portion covering a rear of the base plate, and a rear plate portion extending forward from one side of the rear cover portion, wherein the rear cover portion and the rear plate portion are integrally formed; a first side frame covering a left side of the base plate; and a second side frame covering a right side of the base plate.

The front frame may include at least one reinforcing rib located to face a space between the plurality of battery modules and extending from the front plate portion to the front cover portion.

The rear frame may include at least one reinforcing rib located to face a space between the plurality of battery modules and extending from the rear plate portion to the rear cover portion.

A first step structure of which height is reduced step by step in an end direction may be formed on both ends of the front cover portion in a left-right direction.

A second step structure of which height is reduced step by step in an outer direction may be formed on front and rear ends of each of the first side frame and the second side frame so as to be coupled with the first step structure of the front cover portion.

The front frame further includes a first protrusion having an upper portion relatively protruding more forward than a lower portion on a front surface of the front cover portion.

The rear frame further includes a second protrusion having an upper portion relatively protruding more rearward than a lower portion on a rear surface of the rear cover portion.

The front cover portion of the front frame may include a plurality of horizontal ribs each having a plate shape protruding forward from the front and extending in a left- right direction and arranged in an up-down direction.

Among the plurality of horizontal ribs, the horizontal rib located on a lower portion may be configured to have a relatively smaller forward protruding length than the horizontal rib located on an upper portion.

The battery pack may further include a battery management system (BMS).

The front cover portion or the rear cover portion may include an accommodation space accommodating at least a part of the BMS.

The battery pack may further include a cooling unit including a refrigerant passage configured to allow a refrigerant to move, an injection hole configured to allow the refrigerant to be injected into the refrigerant passage, and a discharge hole configured to allow the refrigerant to be discharged from the refrigerant passage.

The first side frame may include a first connection hole communicatively connected to the injection hole, and a first refrigerant passage communicatively connected to the first connection hole and extending in a front-rear direction along a body of the first side frame.

The second side frame may include a second connection hole communicatively connected to the discharge hole, and a second refrigerant passage communicatively connected to the second connection hole and extending in the front-rear direction along a body of the second side frame.

In another aspect of the present disclosure, there is provided an electronic device including at least one battery pack described above.

In another aspect of the present disclosure, there is provided a vehicle including at least one battery pack described above.

### Advantageous Effects

According to an aspect of the present disclosure, the present disclosure includes a front frame, a rear frame, a first side frame, and a second side frame so as to cover the front, rear, left, and right of the battery module, thereby safely protecting the plurality of battery modules which are mounted, from the external impact.

Furthermore, because the front frame and rear frame of the present disclosure respectively have a front cover portion and a front plate portion which are integrally formed, and a rear cover portion and a rear plate portion which are integrally formed, compared to the related art, the width size of cross-sections of the front frame and rear frame in a front-rear direction increases, and thus, when the external impact in the front-rear direction is applied to the battery pack, the battery pack has a high mechanical rigidity enough to protect the plurality of battery modules which are mounted.

According to another aspect of the present disclosure, a first step structure is formed in each of the front cover portion and the rear cover portion, and a second step structure is formed in each of the first side frame and the second side frame, and thus the present disclosure may effectively increase the coupling area between the front cover portion and the rear cover portion and the first side frame and the second side frame. Accordingly, as compared to the related art, the coupling force of the front frame and the rear frame and the first side frame and the second side frame may be effectively increased, and thus, when the external impact in the front-rear direction is applied to the battery pack, the present disclosure may effectively transfer the impact to each of the first side frame and the second side frame, thereby increasing the mechanical rigidity enough to protect the plurality of battery modules which are mounted.

According to the present invention, the front cover portion and the front plate portion are integrally formed, and thus sealing between the front cover portion and the front plate portion may be secured, and additional welding to the corresponding part is unnecessary, and thus the manufacturing convenience may be increased. Further, according to the present disclosure, the rear cover portion and the rear plate portion are formed integrally, and thus sealing between the rear cover portion and the rear plate portion may be secured, and additional welding to the corresponding part is unnecessary, and thus the manufacturing convenience may be increased.

In addition, the present disclosure may have several different effects, which is described in each of the embodiments, or the effect that can be easily inferred by those skilled in the art is not described.

### DESCRIPTION OF DRAWINGS

The accompanying drawings illustrate the present disclosure and together with the foregoing disclosure, serve to provide further understanding of the technical features of the present disclosure, and thus, the present disclosure is not construed as being limited to the drawing.
FIG. 1 is a perspective view schematically illustrating a battery pack according to an unclaimed embodiment of the present disclosure.
FIG. 2 is an exploded perspective view schematically illustrating a battery pack according to an unclaimed embodiment of the present disclosure.
FIG. 3 is a right side view schematically illustrating a front frame of a battery pack according to an unclaimed embodiment of the present disclosure.
FIG. 4 is a right side view schematically illustrating a rear frame of a battery pack according to another unclaimed embodiment of the present disclosure.
FIG. 5 is a side view schematically illustrating a front frame of a battery pack according to another unclaimed embodiment of the present disclosure.
FIG. 6 is a side view schematically illustrating a rear frame of a battery pack according to another unclaimed embodiment of the present disclosure.
FIG. 7 is a front perspective view schematically illustrating a front frame of a battery pack according to the claimed invention.
FIG. 8 is a rear perspective view schematically illustrating a rear frame of a battery pack according to the claimed invention.
FIG. 9 is a front perspective view schematically illustrating a front frame of a battery pack according to another embodiment of the claimed invention.
FIG. 10 is a rear perspective view schematically illustrating a rear frame of a battery pack according to an unclaimed embodiment of the present disclosure.
FIG. 11 is a perspective view schematically illustrating a cooling unit and an intermediate frame of a battery pack according to an embodiment of the claimed invention.
FIG. 12 is a rear perspective view schematically illustrating a first side frame of a battery pack according to an embodiment of the claimed invention.
FIG. 13 is a rear perspective view schematically illustrating a second side frame of a battery pack according to an embodiment of the claimed invention.
FIG. 14 is a view for explaining coupling relationships between a front frame, a base plate, and a cooling unit.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other modifications could be made thereto without departing from the scope of the disclosure.

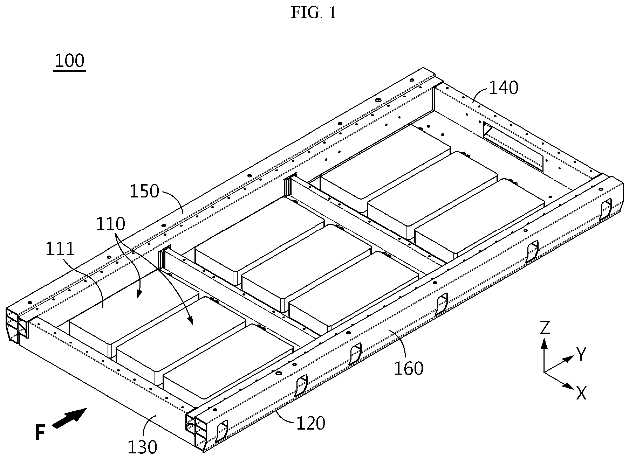

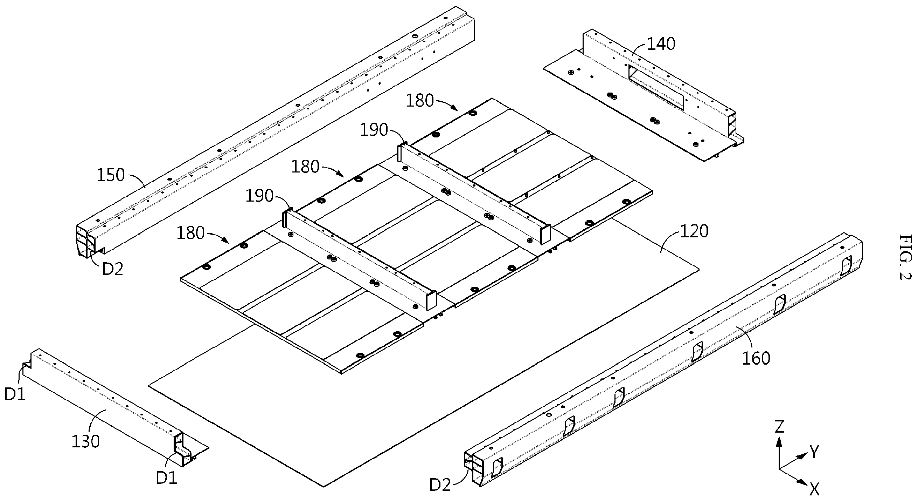

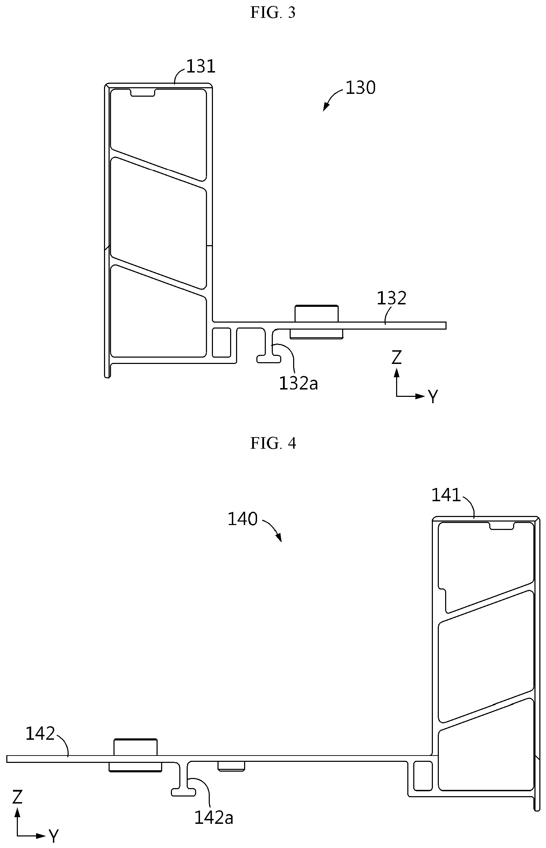

FIG. 1 is a perspective view schematically illustrating a battery pack according to an unclaimed embodiment of the present disclosure. FIG. 2 is an exploded perspective view schematically illustrating a battery pack according to an unclaimed embodiment of the present disclosure. FIG. 3 is a right side view schematically illustrating a front frame of a battery pack according to an unclaimed embodiment of the present disclosure. FIG. 4 is a right side view schematically illustrating a rear frame of a battery pack according to another unclaimed embodiment of the present disclosure.

Referring to FIGS. 1 to 4, a battery module 100 according to an unclaimed embodiment of the present disclosure includes a plurality of battery modules 110, a base plate 120, a front frame 130, a rear frame 140, a first side frame 150, and a second side frame 160.

Specifically, the battery module 110 may include a plurality of battery cells (not shown) and a module housing 111 that accommodates the plurality of battery cells therein. The battery cell may be a lithium secondary battery. The battery cell may be a pouch-type battery cell including an electrode assembly (not shown), an electrolyte (not shown), and a pouch accommodating the electrode assembly and the electrolyte therein. However, the battery module 100 according to the present disclosure is not limited to the pouch-type battery cell described above. For example, the battery cell may be a cylindrical battery cell. That is, various types of secondary batteries disclosed at the time of filing of the present disclosure may be employed as the battery cell.

The battery module 110 may include at least one bus bar (not shown) configured to electrically interconnect the plurality of battery cells. Specifically, the bus bar may include a conductive metal, for example, copper, aluminum, nickel, etc.

In addition, the module housing 111 may include an electrically insulating material. For example, the module housing 111 may be manufactured of a polyvinyl chloride material. The module housing 111 may include a space capable of accommodating the plurality of battery cells therein. The module housing 111 may have a box shape of a rectangular parallelepiped as a whole.

Moreover, the plurality of battery modules 110 may be electrically connected to each other through a power cable or a bus bar. Generally known configurations may be applied as detailed configurations of the battery module 110, and accordingly, detailed descriptions thereof are not provided herein.

In addition, the base plate 120 may have a plate shape extending in a horizontal direction. The base plate 120 may include a metal material having excellent mechanical rigidity. The plurality of battery modules 110 may be located on an upper portion of the base plate 120. In addition, the base plate 120 may be configured to be coupled to each of the front frame 130, the rear frame 140, the first side frame 150, and the second side frame 160. The coupling method may be, for example, friction stir welding. Here, the horizontal direction means a planar direction of a flat ground.

Furthermore, when viewed from the front with respect to an arrow F in FIG. 1, the front frame 130 may be coupled to a front end of the base plate 120 so as to cover the front of the plurality of battery modules 110. The front frame 130 includes a front cover portion 131 and a front plate portion 132. Here, the front frame 130 is configured such that the front cover portion 131 and the front plate portion 132 are integrally formed. For example, the front frame 130 may be manufactured by extrusion molding so that the front cover portion 131 and the front plate portion 132 are integrally formed. Therefore, according to the present disclosure, a separate welding in a front end region of the battery pack 100 is unnecessary. Furthermore, because the front cover portion 131 and the front plate portion 132 are integrally formed, sealing of the front end of the battery pack 100 is secured.

Here, the terms indicating directions such as front, rear, left, right, up, and down may vary depending on a location of an observer or a shape of a target object which is placed. However, for convenience of description, in the present specification, the directions such as front, rear, left, right, up, and down are distinctively indicated with respect to when viewed in the direction of the arrow F in FIG. 1.

In addition, the front cover portion 131 may have a shape extending long in a left-right direction and erected in an upper direction. A lower surface of the front cover portion 131 may be coupled to an upper surface of the base plate 120. For example, as shown in FIG. 2, the front cover portion 131 may have a shape having a predetermined width in the front-rear direction, and extending in the left-right direction so that both ends reach each of the first side frame 150 and the second side frame 160. Also, as shown in FIG. 3, the front cover portion 131 may have an internal space surrounded by an outer wall and empty inside. A plurality of ribs for reinforcing mechanical rigidity may be formed to be spaced apart from each other by a predetermined interval in the internal space.

The front plate portion 132 is formed to extend rearward from one side of the front cover portion 131. For example, as shown in FIG. 3, the front plate portion 132 may have a plate shape extending rearward from a lower rear side of the front cover portion 131. The front plate portion 132 may include a support structure 132a having an approximately I-shaped beam shape extending in a lower direction from the body extending in the horizontal direction so as to be coupled to an upper surface of the base plate 120.

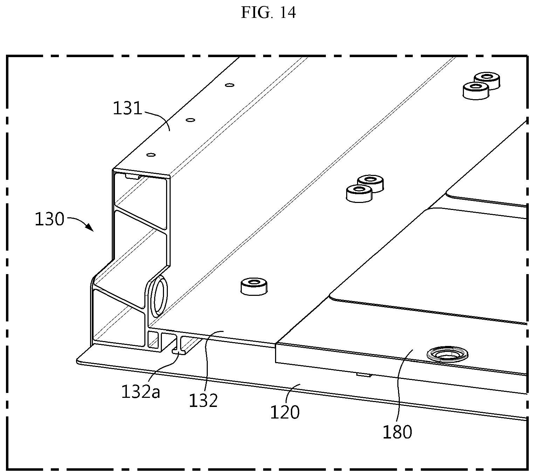

For example, referring to FIG. 14, the support structure 132a protruding in the lower direction from the body extending in the horizontal direction of the front plate portion 132 may be provided. The support structure 132a may have, for example, the approximately I-shaped beam shape. A lower surface of the support structure 132a may be coupled onto the base plate 120 in contact with the base plate 12. That is, the support structure 132a may support the front plate portion 132 upward from the base plate 120. Meanwhile, a lower surface of the front cover portion 131 may also be coupled onto the base plate 120 in contact with base plate 120. In this regard, the lower surface of the front cover portion 131 and the lower surface of the support structure 132a may be substantially on the same plane. Accordingly, the lower surface of the front cover portion 131 and the lower surface of the support structure 132a may be in contact with and coupled onto the base plate 120 simultaneously.

Meanwhile, because the overall width of the front frame 130 in the front-rear direction is increased by the front plate portion 132, when an external impact in the front-rear direction is applied to the battery pack 100, the mechanical rigidity may be increased enough to protect the plurality of battery modules 110 which are mounted.

In addition, the rear frame 140 may be configured to cover the rear of the plurality of battery modules 110. The rear frame 140 may be coupled to a rear end of the base plate 120. The rear frame 140 includes a rear cover portion 141 and the rear plate portion 142. Here, the rear frame 140 is configured such that the rear cover portion 141 and the rear plate portion 142 are integrally formed. For example, the rear frame 140 may be manufactured by extrusion molding so that the rear cover portion 141 and the rear plate portion 142 are integrally formed. Accordingly, according to the present disclosure, separate welding is unnecessary in a rear end region of the battery pack 100. Furthermore, the rear cover portion 141 and the rear plate portion 142 are integrally formed, and thus sealing of the rear end of the battery pack 100 is secured.

Furthermore, the rear cover portion 141 may have a shape extending long in the left-right direction and erected in the upper direction. A lower surface of the rear cover portion 141 may be coupled to the upper surface of the base plate 120. For example, as shown in FIG. 2, the rear cover portion 141 may have a shape having a predetermined width in the front-rear direction, and extending in the left-right direction so that both ends reach each of the first side frame 150 and the second side frame 160. In addition, as shown in FIG. 4, the rear cover portion 141 may have an internal space surrounded by the outer wall and empty inside. A plurality of ribs for reinforcing mechanical rigidity may be formed to be spaced apart from each other by a predetermined interval in the internal space.

The rear plate portion 142 is formed to extend forward from one side of the rear cover portion 141. For example, as shown in FIG. 3, the rear plate portion 142 may have a plate shape extending forward from a lower rear side of the rear cover portion 141. The rear plate portion 142 may include a support structure 142a having an approximately I-shaped beam shape extending in the lower direction from the body extending in the horizontal direction so as to be coupled to the upper surface of the base plate 120.

For example, although not shown in the figures, the support structure 142a protruding in the lower direction from the body extending in the horizontal direction of the rear plate portion 142 may be provided. The support structure 142a may have, for example, the approximately I-shaped beam shape. A lower surface of the support structure 142a may be coupled onto the base plate 120 in contact with the base plate 12. That is, the support structure 142a may support the rear plate portion 142 upward from the base plate 120. Meanwhile, a lower surface of the rear cover portion 141 may also be coupled onto the base plate 120 in contact with base plate 120. In this regard, the lower surface of the rear cover portion 141 and the lower surface of the support structure 142a may be substantially on the same plane. Accordingly, the lower surface of the rear cover portion 141 and the lower surface of the support structure 142a may be in contact with and coupled onto the base plate 120 simultaneously.

Meanwhile, because a width of the rear frame 140 in the front-rear direction is increased by the rear plate portion 142, when an external impact in the front-rear direction is applied to the battery pack 100, the mechanical rigidity may be increased enough to protect the plurality of battery modules 110 which are mounted.

The first side frame 150 may have a shape extending long in the front-rear direction (parallel to a Y-axis). A part of the first side frame 150 may be coupled to a left end of the base plate 120 so as to cover the left side of the plurality of battery modules 110. The first side frame 150 may be configured to be coupled to the left end of each of the front frame 130 and the rear frame 140.

In addition, the second side frame 160 may have a shape extending long in the front-rear direction (parallel to the Y-axis). A part of the second side frame 160 may be coupled to a right end of the base plate 120 so as to cover the right side of the plurality of battery modules 110. The second side frame 160 may be coupled to the right end of each of the front frame 130 and the rear frame 140.

Therefore, according to such a configuration of the present disclosure, the present disclosure includes the front frame 130, the rear frame 140, the first side frame 150, and the second side frame 160 so as to cover the front, rear, left, and right of the battery module 110, thereby safely protecting the plurality of battery modules 110 which are mounted from the external impact.

Furthermore, because the front frame 130 and the rear frame 140 of the present disclosure includes the front cover portion 131 and the front plate portion 132 which are integrally formed, and the rear cover portion 141 and the rear plate portion 142 which are integrally formed, compared to the related art, the width size of cross-sections of the front frame 130 and the rear frame 140 in the front-rear direction increases, and thus, when the external impact in the front-rear direction is applied to the battery pack 100, the battery pack 100 has a high mechanical rigidity enough to protect the plurality of battery modules 110 which are mounted.

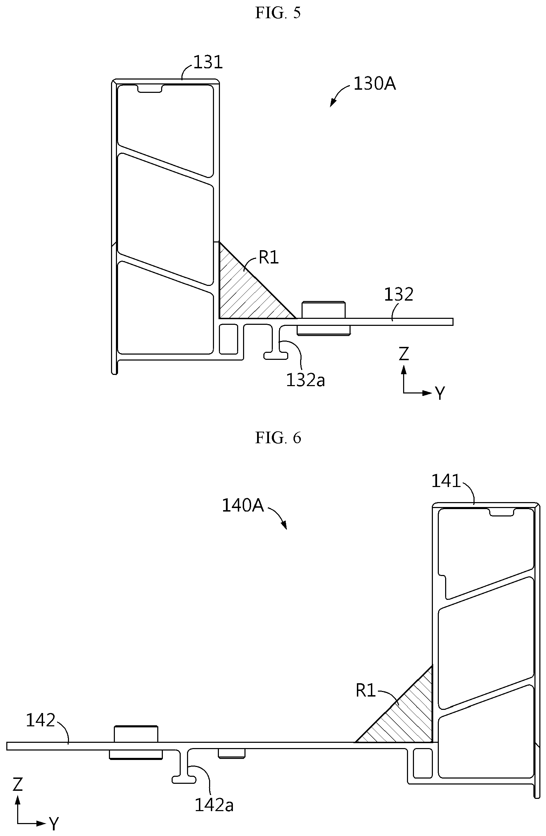

FIG. 5 is a side view schematically illustrating a front frame of a battery pack according to another unclaimed embodiment of the present disclosure.

Referring to FIG. 5 together with FIGS. 1 and 2, a front frame 130A of the battery pack 100 according to another unclaimed embodiment of the present disclosure may further include at least one reinforcing rib R1. The reinforcing rib R1 may have a shape extending in an oblique direction from an upper surface of the front plate portion 132 to a rear surface of the front cover portion 131. The reinforcing rib R1 may be located to face space between the plurality of battery modules 110. That is, the reinforcing rib R1 may be located so as not to face the plurality of battery modules 110 in a front-rear direction. Alternatively, the reinforcing rib R1 may have an extending shape enough to be partially inserted between the plurality of battery modules 110.

FIG. 6 is a side view schematically illustrating a rear frame of a battery pack according to another embodiment of the present disclosure.

Referring to FIG. 6 together with FIG. 1, a rear frame 140A of the battery pack 100 according to another unclaimed embodiment of the present disclosure may further include the at least one reinforcing rib R1. The reinforcing rib R1 may have a shape extending in an oblique direction from the rear plate portion 142 to the rear cover portion 141. The reinforcing rib R1 may be located to face space between the plurality of battery modules 110. That is, the reinforcing rib R1 may not be located to face the plurality of battery modules 110 in the front-rear direction. Alternatively, the reinforcing rib R1 may have an extending shape enough to be partially inserted between the plurality of battery modules 110.

Therefore, according to such a configuration of the present disclosure, the reinforcing ribs R1 is provided on the front frame 130A and/or the rear frame 140A in the present disclosure, and thus when an external impact in the front-rear direction is applied to the battery pack 100, the front frame 130A and/or the rear frame 140A may increase the mechanical rigidity enough to protect the plurality of battery modules 110 which are mounted.

Furthermore, the reinforcing rib R1 of the present disclosure is located between the plurality of battery modules 110, and thus the reinforcing rib R1 may serve to guide a location in which each of the plurality of battery modules 110 is mounted, thereby effectively increasing the manufacturing efficiency of the battery module 110.

Meanwhile, referring back to FIGS. 1 and 2, a first step structure D1 may be formed at both ends of the front cover portion 131 of the battery pack 100 according to an embodiment of the present disclosure in a left-right direction. The first step structure D1 may have a shape in which a height is gradually reduced in a direction of an edge portion at the end of the front cover portion 131. For example, as shown in FIG. 2, the first step structure D1 of which height is reduced step by step toward a left direction may be formed at the left end of the front cover portion 131. The first step structure D1 of which height is reduced step by step toward a right direction may be formed at the right end of the front cover portion 131.

In addition, a second step structure D2 may be formed at a front end and/or a rear end of each of the first side frame 150 and the second side frame 160. For example, the second step structure D2 may be configured to be coupled to the first step structure D1 of the front cover portion 131. That is, the second step structure D2 may have a shape corresponding to the first step structure D1 formed on the front cover portion 131. The second step structure D2 of each of the first side frame 150 and the second side frame 160 may have a shape in which a height is gradually reduced in an outer direction with respect to the center of the battery pack 100.

Therefore, according to such a configuration of the present disclosure, the first step structure D1 is formed on the front cover portion 131, and the second step structure D2 is also formed in each the first side frame 150 and the second side frame 160, and thus the present disclosure may effectively increase a coupling area between the front cover portion 131 and the rear cover portion 141 and the first side frame 150 and the second side frame 160. Accordingly, as compared to the related art, a coupling force of the front frame 130 and the rear frame 140 and the first side frame 150 and the second side frame 160 may be effectively increased, and thus, when the external impact in the front-rear direction is applied to the battery pack 100, the present disclosure may effectively transfer the impact to each of the first side frame 150 and the second side frame 160, thereby increasing the mechanical rigidity enough to protect the plurality of battery modules 110 which are mounted.

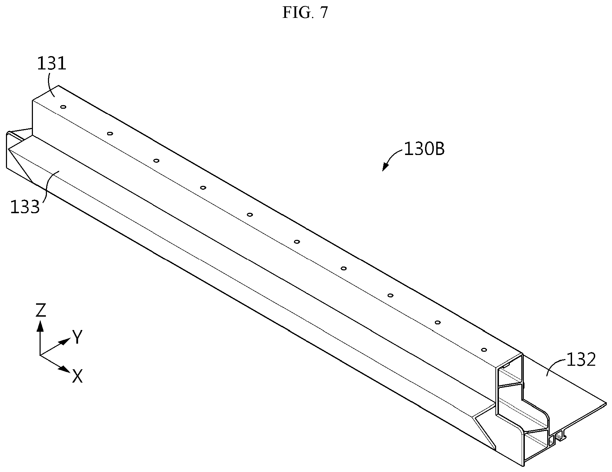

FIG. 7 is a front perspective view schematically illustrating a front frame of a battery pack according to the present invention.

Referring to FIG. 7, the front frame 130B of the battery pack according to the present invention further includes a first protrusion 133 as compared to the front frame 130 of FIG. 2. The first protrusion 133 is formed to protrude forward on a front surface of the front cover portion 131. For example, as shown in FIG. 7, the first protrusion 133 may be located on a lower portion of the front surface of the front cover portion 131 with respect to the center and may have a shape protruding forward from the front surface. Also, the first protrusion 133 has a shape in which a length protruding forward decreases in a lower direction.

That is, the first protrusion 133 may include a part extending in a horizontal direction and a part extending downward to be inclined rearward.

Accordingly, according to such a configuration of the present disclosure, the front frame 130B of the present disclosure further includes the first protrusion 133, and thus, when an external object collides with the front of the battery pack 100, the external object first may collide with the first protrusion 133, and a collision impact may be intensively transferred to the front plate portion 132 of the front frame 130B. Because the front frame 130B including the front plate portion 132 has a greater cross-sectional area of a lower portion in a front-rear direction than that of an upper portion, the lower portion may have a greater resistance to the impact in the front-rear direction than the upper portion. Accordingly, it is possible to effectively prevent the plurality of battery modules 110 mounted on the battery pack 100 from being damaged.

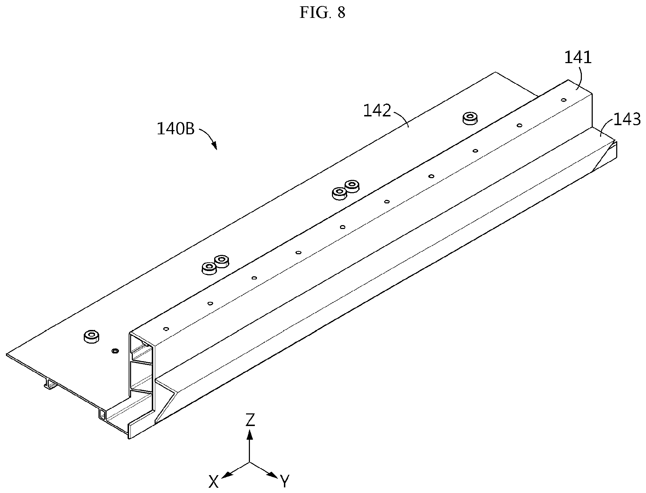

FIG. 8 is a rear perspective view schematically illustrating a rear frame of a battery pack according to the present invention.

Referring to FIG. 8, a rear frame 140B of the battery pack according to another embodiment of the present disclosure further includes a second protrusion 143 as compared to the rear frame 140 of FIG. 2. The second protrusion 143 may be located on a lower portion of a rear surface of the rear cover portion 141 with respect to the center. In addition, the second protrusion 143 may have a shape that protrudes rearward more than the rear surface of the rear cover portion 141. As shown in FIG. 8, the second protrusion 143 has a shape in which the upper portion protrudes rearward more than the lower portion. That is, the second protrusion 143 has a shape in which a rearward protruding length decreases in a lower direction.

That is, the second protrusion 143 may have a part extending in a horizontal direction and a part extending downward to be inclined rearward.

Accordingly, according to such a configuration of the present disclosure, the rear frame 140B of the present disclosure further includes the second protrusion 143, and thus, when an external object collides with the rear of the battery pack 100, the external object first may collide with the second protrusion 143, and a collision impact may be effectively transferred to the rear plate portion 142 located on the lower portion of the rear frame 140B. That is, because the rear frame 140B including the rear plate portion 142 has a greater cross-sectional area of a lower portion in a front-rear direction than that of an upper portion, the lower portion may have a greater resistance to the impact in the front-rear direction than the upper portion. Accordingly, it is possible to effectively prevent the plurality of battery modules 110 mounted on the battery pack 100 from being damaged.

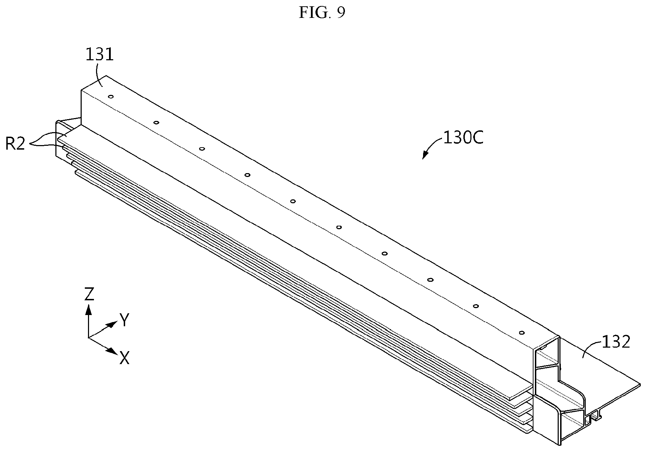

FIG. 9 is a front perspective view schematically illustrating a front frame of a battery pack according to another embodiment of the present disclosure.

Referring to FIG. 9, a front frame 130C of the battery pack according to another embodiment of the present disclosure may further include a plurality of horizontal ribs R2 as compared to the front frame 130 of FIG. 2. Specifically, each of the plurality of horizontal ribs R2 may have a plate shape protruding forward from a front surface of the front cover portion 131. The plurality of horizontal ribs R2 may be located on a lower portion of a front surface of the front frame 130C with respect to the center. Each of the plurality of horizontal ribs R2 may have a plate shape extending in a left-right direction to an end of the front cover portion 131. The plurality of horizontal ribs R2 may be arranged to be vertically spaced apart from each other at a predetermined interval.

In addition, among the plurality of horizontal ribs R2, the horizontal rib R2 located on a lower portion may be configured to have a relatively smaller forward protruding length than the horizontal rib R2 located on an upper portion. That is, the plurality of horizontal ribs R2 may be formed to have different forward protruding lengths. That is, the plurality of horizontal ribs R2 may be configured such that the forward protruding length of the horizontal rib R2 located on the relatively lower portion gradually decreases.

Accordingly, according to such a configuration of the present disclosure, the present disclosure includes the front frame 130C including the plurality of horizontal ribs R2, thereby effectively defending a front impact of the battery pack 100. That is, when an external object collides with the front of the battery pack 100, the external object first may collide with the plurality of horizontal ribs R2, and a collision impact may be intensively concentrated on the front plate portion 132 located on the lower portion of the front frame 130C. That is, because the front frame 130C including the front plate portion 132 has a greater cross-sectional area of a lower portion in a front-rear direction than that of an upper portion, the lower portion may have a greater resistance to the impact in the front-rear direction than the upper portion. Accordingly, it is possible to effectively prevent the plurality of battery modules 110 mounted on the battery pack 100 from being damaged.

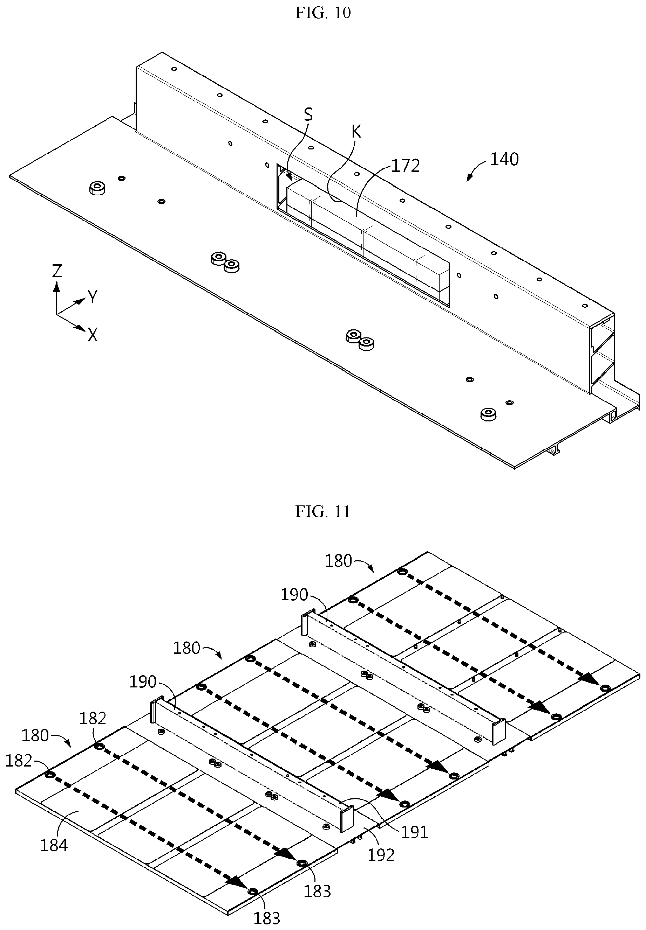

FIG. 10 is a rear perspective view schematically illustrating a rear frame of a battery pack according to an embodiment of the present disclosure.

Referring to FIG. 10, the battery pack according to an unclaimed embodiment of the present disclosure may further include a BMS 172. A part of the front cover portion 131 or the rear cover portion 141 may be opened so as to accommodate at least a part of the BMS 172. For example, the part of the front cover portion 131 or the rear cover portion 141 may be opening K so as to accommodate some components of the BMS 172. Through the opening K, some components of the BMS 172 may be put into the inside. The rear cover portion 141 may include an accommodation space S that is communicatively connected to the opening K and is empty inside so as to accommodate some components of the BMS 172 therein.

Therefore, according to such a configuration of the present disclosure, the present disclosure includes the accommodation space S capable of accommodating at least a part of the BMS 172 therein, thereby more safely accommodating the BMS that performs safety control according to an abnormal operation of the battery pack 100, and thus the safety of the battery pack 100 may be maximized. Moreover, the accommodation space S may protect some components of the BMS 172 from electromagnetic waves of electricity generated from the plurality of battery modules 110. For example, the BMS 172 may include, for example, a control board, a relay, a fuse, a cable, etc.

FIG. 11 is a perspective view schematically illustrating a cooling unit and an intermediate frame of a battery pack according to an embodiment of the present disclosure. In FIG. 11, directions of movement of a refrigerant are indicated by arrows for convenience of drawing description.

Referring to FIG. 11 together with FIG. 2, the battery pack 100 according to an embodiment of the present disclosure may further include a cooling unit 180. The cooling unit 180 may have a plate shape extending in a horizontal direction so as to mount the plurality of battery modules 110 thereon. Referring to FIG. 14, a lower surface of the cooling unit 180 may be coupled to the base plate 120. In addition, one side surface of the cooling unit 180 may be in contact with the front plate portion 132. According to this structure, a side surface of the front plate portion 132 may be supported in contact with the cooling unit 180. Accordingly, when an impact in a front-rear direction is applied to the front frame 130, the front plate portion 132 is supported by the side surface of the cooling unit 180, and thus there is little risk of damage to a coupling portion between the front plate portion 132 and the base plate 120. In addition, when a very strong impact in the front-rear direction is applied to the front frame 130, the front plate portion 132 maybe crumpled in the front-rear direction and absorb the impact while being supported from the side surface of the cooling unit 180.

Although not shown in the figure, another side surface of the cooling unit 180 may be in contact with the rear plate portion 142. According to this structure, a side surface of the rear plate portion 142 may be supported in contact with the cooling unit 180. Accordingly, when an impact in a front-rear direction is applied to the rear frame 140, the rear plate portion 142 is supported by the side surface of the cooling unit 180, and thus there is little risk of damage to a coupling portion between the rear plate portion 142 and the base plate 120. In addition, when a very strong impact in the front-rear direction is applied to the rear frame 140, the rear plate portion 142 maybe crumpled in the front-rear direction and absorb the impact while being supported from the side surface of the cooling unit 180.

The cooling unit 180 may include a refrigerant passage (not shown), an injection hole 182, and a discharge hole 183.

In addition, the refrigerant passage may be provided inside the cooling unit 180. The refrigerant passage may include barrier ribs so that the refrigerant moves. The refrigerant may be, for example, air, water, or insulating oil.

Moreover, the injection hole 182 may be configured to be communicatively connected to the refrigerant passage. The injection hole 182 may be configured to inject the refrigerant. That is, the injection hole 182 may be configured to inject the refrigerant into the refrigerant passage. The discharge hole 183 may be configured to discharge the refrigerant that has passed through the refrigerant passage to the outside. That is, the discharge hole 183 may be to be communicatively connected to the refrigerant passage.

For example, as shown in FIG. 11, the battery pack 100 may include three cooling units 180. Two injection holes 182 and two discharge holes 183 may be provided in each of the three cooling units 180. The refrigerant injected into the two injection holes 182 may move in a direction of an arrow G along the refrigerant passage inside, and may be discharged through the two discharge holes 183.

Also, the cooling unit 180 may be configured to mount the plurality of battery modules 110 thereon. The cooling unit 180 may further include a heat conduction pad 184. The heat conduction pad 184 may be interposed between the battery module 110 and the cooling unit 180.

Therefore, according to such a configuration of the present disclosure, the present disclosure includes the cooling unit 180, thereby effectively cooling the plurality of battery modules 110 which are mounted. In addition, the cooling unit 180 may be configured to be coupled to the base plate 120 to serve to resist an external impact.

Meanwhile, referring back to FIGS. 2 and 11, the battery pack according to an embodiment of the present disclosure may further include at least one intermediate frame 190. The intermediate frame 190 may be disposed between the cooling units. The intermediate frame 190 may include an intermediate cover 191 and an intermediate plate portion 192. The intermediate cover 191 may have a shape having a predetermined thickness in a front-rear direction and extending in a left-right direction. The intermediate cover 191 may have a shape erected in an upper direction. The intermediate plate portion 192 may have a shape extending in a horizontal direction. The intermediate plate portion 192 may have a shape integrally coupled to a lower portion of the intermediate cover 191. For example, the intermediate frame 190 may be integrally formed through extrusion molding.

In addition, each of both ends of the intermediate frame 190 may be coupled to a side portion of each of the first side frame 150 and the second side frame 160. A lower surface of the intermediate frame 190 may be configured to be coupled to an upper surface of the base plate 120.

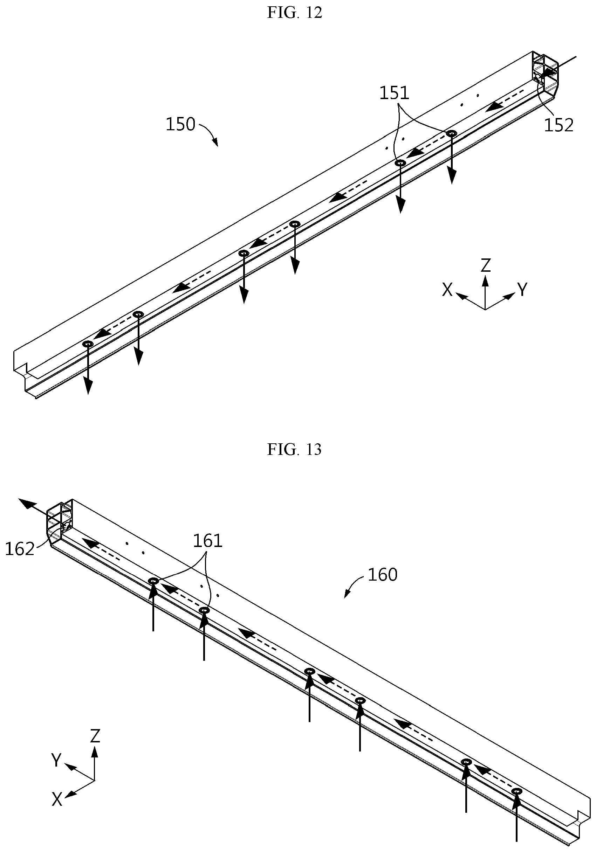

FIG. 12 is a rear perspective view schematically illustrating a first side frame of a battery pack according to an embodiment of the present disclosure. In FIG. 12, movement of a refrigerant are indicated by arrows for convenience of drawing description.

Referring to FIG. 12, a first side frame 150 of the battery pack 100 according to an embodiment of the present disclosure may include a first connection hole 151 and a first refrigerant passage 152. The first connection hole 151 may be connected to the injection hole 182 so as to be communicatively connected to the injection hole 182 of the cooling unit 180. That is, the first connection hole 151 may have an opening size corresponding to the injection hole 182. The first connection hole 151 may be located to be in close contact with the injection hole 182. Also, the first connection hole 151 may be formed by opening a part of the first refrigerant passage 152 so as to be communicatively connected to the first refrigerant passage 152. The first refrigerant passage 152 may extend in the front-rear direction along the body of the first side frame 150.

For example, as shown in FIG. 12, the first side frame 150 may include six first connection holes 151. The six first connection holes 151 may be arranged in the front-rear direction and spaced apart from each other by a predetermined interval. The first refrigerant passage 152 of the first side frame 150 may extend in the front-rear direction along the body. The first refrigerant passage 152 does not include a separate tube, and, when the first side frame 150 is extrusion-molded, may be formed by extending in a tubular shape in the front-rear direction (Y direction). Each of the six first connection holes 151 may be communicatively connected to the first refrigerant passage 152. Each of the six first connection holes 151 may be configured to be connected to the injection hole 182 of the cooling unit 180.

That is, the refrigerant injected from a rear end of the first refrigerant passage 152 of the first side frame 150 may move rearward along the first refrigerant passage 152, and may move the refrigerant to the cooling unit 180 through each of the six first connection holes 151.

FIG. 13 is a rear perspective view schematically illustrating a second side frame of a battery pack according to an embodiment of the present disclosure. In FIG. 13, movement of a refrigerant are indicated by arrows for convenience of drawing description.

Referring to FIG. 13, a second side frame 160 of the battery pack 100 according to an embodiment of the present disclosure may include a second connection hole 161 and a second refrigerant passage 162. The second connection hole 161 may be connected to the discharge hole 183 so as to be communicatively connected to the discharge hole 183 of the cooling unit 180. That is, the second connection hole 161 may have an opening size corresponding to the discharge hole 183 and may be located to be in close contact with the discharge hole 183. Also, the second connection hole 161 may be formed by opening a part of the second refrigerant passage 162 so as to be communicatively connected to the second refrigerant passage 162. The second refrigerant passage 162 may extend in a front-rear direction (Y direction) along the body of the second side frame 160.

For example, as shown in FIG. 13, the second side frame 160 may include six second connection holes 161. The six second connection holes 161 may be arranged in the front-rear direction and spaced apart from each other by a predetermined interval. The second refrigerant passage 162 of the second side frame 160 may extend in the front-rear direction (Y direction) along the body. The second refrigerant passage 162 does not include a separate tube, and, when the second side frame 160 is extrusion-molded, may be formed by extending in a tubular shape in the front-rear direction. Each of the six second connection holes 161 may be communicatively connected to the second refrigerant passage 162. Each of the six second connection holes 161 may be configured to be connected to the discharge hole 183of the cooling unit 180.

That is, in the second refrigerant passage 162 of the second side frame 160, the refrigerant may be introduced from the cooling unit 180 through each of the six second connection holes 161, and the introduced refrigerant may be moved to the rear end of the second refrigerant passage 162 and discharged to the outside.

Therefore, according to such a configuration of the present disclosure, the present disclosure does not include a separate pipe or tube, and forms a refrigerant passage in each of the first side frame 150 and the second side frame 160, thereby reducing the number of components of the battery pack, and accordingly reducing the material cost and simplifying the manufacturing process. Accordingly, the present disclosure may significantly reducing the manufacturing cost while increasing the cooling efficiency of the plurality of battery modules.

Meanwhile, a battery pack (not shown) according to an embodiment of the present disclosure may include at least on battery module 110 and a battery management system (BMS) electrically connected to the battery module 110. The BMS may include various circuits or devices to control charging and discharging of the plurality of battery cells.

Meanwhile, a vehicle (not shown separately) according to an embodiment of the present disclosure may include at least on battery module 110 and a vehicle body having an accommodation space accommodating the battery module 110. For example, the vehicle may be an electric vehicle, an electric scooter, an electric wheelchair, or an electric bike.

Meanwhile, an electronic device (not shown) according to an embodiment of the present disclosure may include at least on battery module 110 and an external case having an accommodation space accommodating the battery module 110. For example, the electronic device may be a computer or a power storage device.

Meanwhile, although the terms indicating directions such as up, down, left, right, front, and back are used herein, these terms are only for convenience of description, and it is obvious to one of ordinary skill in the art that the terms may vary depending on the location of a target object or the location of an observer.

The present disclosure has been described in detail. However, it should be understood that the detailed description and specific examples, while indicating embodiments of the disclosure, are given by way of illustration only, since various changes and modifications within the scope of the disclosure, which is defined by the appended claims, will become apparent to those skilled in the art from this detailed description.

## Claims

1. A battery pack (100) comprising:
a plurality of battery modules (110);
a base plate (120) on which the plurality of battery modules (110) are located;
a front frame (130B) comprising a front cover portion (131) covering a front of the base plate (120) and a front plate portion (132) extending rearward from one side of the front cover portion (131), wherein the front cover portion (131) and the front plate portion (132) are integrally formed;
a rear frame (140B) having a rear cover portion (141) covering a rear of the base plate (120), and a rear plate portion (142) extending forward from one side of the rear cover portion (141), wherein the rear cover portion (141) and the rear plate portion (142) are integrally formed;
a first side frame (150) covering a left side of the base plate (120); and
a second side (160) frame covering a right side of the base plate (120),
wherein the front frame (130B) further comprises a first protrusion (133) having an upper portion relatively protruding more forward than a lower portion on a front surface of the front cover portion (131), and
wherein the rear frame (140B) further comprises a second protrusion (143) having an upper portion relatively protruding more rearward than a lower portion on a rear surface of the rear cover portion (141).

2. The battery pack (100) of claim 1,
wherein the front frame (130B) comprises at least one reinforcing rib (R1) located to face a space between the plurality of battery modules (110) and extending from the front plate portion (132) to the front cover portion (131), and
wherein the rear frame (140B) comprises at least one reinforcing rib (R1) located to face a space between the plurality of battery modules (110) and extending from the rear plate portion (142) to the rear cover portion (141).

3. The battery pack (100) of claim 1,
wherein a first step structure (D1) of which height is reduced step by step in an end direction is formed on both ends of the front cover portion (131) in a left-right direction, and
wherein a second step structure (D2) of which height is reduced step by step in an outer direction with respect to a center of the battery pack is formed on front and rear ends of each of the first side frame (150) and the second side frame (160) so as to be coupled with the first step structure (D1) of the front cover portion (131).

4. The battery pack (100) of any one of claims 1 to 3,
wherein the front cover portion (131) of the front frame (130B) comprises a plurality of horizontal ribs (R2) each having a plate shape protruding forward from the front and extending in a left- right direction and arranged in an up-down direction, and
wherein, among the plurality of horizontal ribs (R2), the horizontal rib located on a lower portion is configured to have a relatively smaller forward protruding length than the horizontal rib located on an upper portion.

5. The battery pack (100) of claim 1, further comprising: a battery management system, BMS (172),
wherein the front cover portion (131) or the rear cover portion (141) comprises an accommodation space (S) accommodating at least a part of the BMS (172).

6. The battery pack (100) of claim 1, further comprising: a cooling unit (180) comprising a refrigerant passage configured to allow a refrigerant to move, an injection hole (182) configured to allow the refrigerant to be injected into the refrigerant passage, and a discharge hole (183) configured to allow the refrigerant to be discharged from the refrigerant passage.

7. The battery pack (100) of claim 6,
wherein the first side frame (150) comprises a first connection hole (151) communicatively connected to the injection hole (182), and a first refrigerant passage communicatively connected to the first connection hole (151) and extending in a front-rear direction along a body of the first side frame (150), and
wherein the second side frame (160) comprises a second connection hole (161) communicatively connected to the discharge hole (183), and a second refrigerant passage communicatively connected to the second connection hole (161) and extending in the front-rear direction along a body of the second side frame (160).

8. The battery pack (100) of claim 1,
wherein the first protrusion (133) is located on a lower portion of the front surface of the front cover portion (131) with respect to a center and has a shape protruding forward from the front surface.

9. The battery pack (100) of claim 1,
wherein the second protrusion (143) is located on a lower portion of a rear surface of the rear cover portion (141) with respect to a center and has a shape that protrudes rearward more than the rear surface of the rear cover portion (141).

10. The battery pack (100) of claim 1,
wherein the front plate portion (132) includes a support structure (132a) having an I-shaped beam shape extending in a lower direction from a body extending in a horizontal direction so as to be coupled to an upper surface of the base plate (120), and a lower surface of the front cover portion (131) and a lower surface of the support structure of the front plate portion (132) are on the same plane, and
wherein the rear plate portion (142) includes a support structure (142a) having an I-shaped beam shape extending in a lower direction from a body extending in the horizontal direction so as to be coupled to the upper surface of the base plate (120), and a lower surface of the rear cover portion (141) and a lower surface of the support structure of the rear plate portion (142) are on the same plane.

11. The battery pack (100) of claim 7,
wherein the first refrigerant passage does not include a separate tube, and when the first side frame (150) is extrusion-molded, is formed by extending in a tubular shape in the front-rear direction.

12. The battery pack (100) of claim 7, wherein a refrigerant injected from a rear end of the first refrigerant passage of the first side frame (150) moves rearward along the first refrigerant passage, and moves the refrigerant to the cooling unit (180) through the first connection hole (151).

13. An electronic device comprising at least one battery pack (100) according to any one of claims 1 to 12.

14. A vehicle comprising at least one battery pack (100) according to any one of claims 1 to 12.

## Patentansprüche

1. Batteriepack (100), umfassend:
eine Vielzahl von Batteriemodulen (110);
eine Grundplatte (120), auf der die Vielzahl von Batteriemodulen (110) angeordnet ist;
einen vorderen Rahmen (130B), der einen vorderen Abdeckungsabschnitt (131), der eine Vorderseite der Grundplatte (120) abdeckt, und einen vorderen Plattenabschnitt (132) umfasst, der sich von einer Seite des vorderen Abdeckungsabschnitts (131) nach hinten erstreckt, wobei der vordere Abdeckungsabschnitt (131) und der vordere Plattenabschnitt (132) einstückig ausgebildet sind;
einen hinteren Rahmen (140B) mit einem hinteren Abdeckungsabschnitt (141), der eine Rückseite der Grundplatte (120) abdeckt, und einem hinteren Plattenabschnitt (142), der sich von einer Seite des hinteren Abdeckungsabschnitts (141) nach vorne erstreckt, wobei der hintere Abdeckungsabschnitt (141) und der hintere Plattenabschnitt (142) einstückig ausgebildet sind;
einen ersten Seitenrahmen (150), der eine linke Seite der Grundplatte (120) abdeckt; und
einen zweiten Seitenrahmen (160), der eine rechte Seite der Grundplatte (120) abdeckt,
wobei der vordere Rahmen (130B) ferner einen ersten Vorsprung (133) umfasst, der einen oberen Abschnitt aufweist, der relativ weiter nach vorne vorsteht als ein unterer Abschnitt an einer vorderen Oberfläche des vorderen Abdeckungsabschnitts (131), und
wobei der hintere Rahmen (140B) ferner einen zweiten Vorsprung (143) umfasst, der einen oberen Abschnitt aufweist, der relativ weiter nach hinten vorsteht als ein unterer Abschnitt an einer hinteren Oberfläche des hinteren Abdeckungsabschnitts (141).

2. Batteriepack (100) nach Anspruch 1,
wobei der vordere Rahmen (130B) mindestens eine Verstärkungsrippe (R1) umfasst, die so angeordnet ist, dass sie einem Raum zwischen der Vielzahl von Batteriemodulen (110) zugewandt ist und sich vom vorderen Plattenabschnitt (132) zum vorderen Abdeckungsabschnitt (131) erstreckt, und
wobei der hintere Rahmen (140B) mindestens eine Verstärkungsrippe (R1) umfasst, die so angeordnet ist, dass sie einem Raum zwischen der Vielzahl von Batteriemodulen (110) zugewandt ist und sich vom hinteren Plattenabschnitt (142) zum hinteren Abdeckungsabschnitt (141) erstreckt.

3. Batteriepack (100) nach Anspruch 1,
wobei eine erste Stufenstruktur (D1), deren Höhe schrittweise in einer Endrichtung reduziert wird, an beiden Enden des vorderen Abdeckungsabschnitts (131) in einer Links-Rechts-Richtung ausgebildet ist, und
wobei eine zweite Stufenstruktur (D2), deren Höhe schrittweise in einer äußeren Richtung in Bezug auf eine Mitte des Batteriepacks reduziert wird, an vorderen und hinteren Enden jedes des ersten Seitenrahmens (150) und des zweiten Seitenrahmens (160) ausgebildet ist, um mit der ersten Stufenstruktur (D1) des vorderen Abdeckungsabschnitts (131) gekoppelt zu werden.

4. Batteriepack (100) nach einem der Ansprüche 1 bis 3,
wobei der vordere Abdeckungsabschnitt (131) des vorderen Rahmens (130B) eine Vielzahl von horizontalen Rippen (R2) umfasst, die jeweils eine Plattenform aufweisen, die von der Vorderseite nach vorne vorsteht und sich in einer Links-Rechts-Richtung erstreckt und in einer Oben-Unten-Richtung angeordnet ist, und
wobei unter der Vielzahl von horizontalen Rippen (R2) die auf einem unteren Abschnitt angeordnete horizontale Rippe so konfiguriert ist, dass sie eine relativ geringere, nach vorne vorstehende Länge aufweist als die auf einem oberen Abschnitt angeordnete horizontale Rippe.

5. Batteriepack (100) nach Anspruch 1, ferner umfassend: ein Batteriemanagementsystem, BMS (172),
wobei der vordere Abdeckungsabschnitt (131) oder der hintere Abdeckungsabschnitt (141) einen Aufnahmeraum (S) umfasst, der mindestens einen Teil des BMS (172) aufnimmt.

6. Batteriepack (100) nach Anspruch 1, ferner umfassend: eine Kühleinheit (180), die einen Kältemittelkanal, der so konfiguriert ist, dass er ermöglicht, dass sich ein Kältemittel bewegt, ein Einspritzloch (182), das so konfiguriert ist, dass es ermöglicht, dass das Kältemittel in den Kältemittelkanal eingespritzt wird, und ein Auslassloch (183) umfasst, das so konfiguriert ist, dass es ermöglicht, dass das Kältemittel aus dem Kältemittelkanal ausgelassen wird.

7. Batteriepack (100) nach Anspruch 6,
wobei der erste Seitenrahmen (150) ein erstes Verbindungsloch (151), das kommunikativ mit dem Einspritzloch (182) verbunden ist, und einen ersten Kältemittelkanal umfasst, der kommunikativ mit dem ersten Verbindungsloch (151) verbunden ist und sich in einer Vorwärts-Rückwärts-Richtung entlang eines Körpers des ersten Seitenrahmens (150) erstreckt, und
wobei der zweite Seitenrahmen (160) ein zweites Verbindungsloch (161), das kommunikativ mit dem Auslassloch (183) verbunden ist, und einen zweiten Kältemittelkanal umfasst, der kommunikativ mit dem zweiten Verbindungsloch (161) verbunden ist und sich in der Vorwärts-Rückwärts-Richtung entlang eines Körpers des zweiten Seitenrahmens (160) erstreckt.

8. Batteriepack (100) nach Anspruch 1,
wobei der erste Vorsprung (133) an einem unteren Abschnitt der vorderen Oberfläche des vorderen Abdeckungsabschnitts (131) in Bezug auf eine Mitte angeordnet ist und eine Form aufweist, die von der vorderen Oberfläche nach vorne vorsteht.

9. Batteriepack (100) nach Anspruch 1,
wobei der zweite Vorsprung (143) an einem unteren Abschnitt einer hinteren Oberfläche des hinteren Abdeckungsabschnitts (141) in Bezug auf eine Mitte angeordnet ist und eine Form aufweist, die weiter nach hinten vorsteht als die hintere Oberfläche des hinteren Abdeckungsabschnitts (141).

10. Batteriepack (100) nach Anspruch 1,
wobei der vordere Plattenabschnitt (132) eine Stützstruktur (132a) mit einer I-förmigen Trägerform enthält, die sich von einem sich in horizontaler Richtung erstreckenden Körper in einer unteren Richtung erstreckt, um mit einer oberen Oberfläche der Grundplatte (120) gekoppelt zu werden, und eine untere Oberfläche des vorderen Abdeckungsabschnitts (131) und eine untere Oberfläche der Stützstruktur des vorderen Plattenabschnitts (132) auf derselben Ebene liegen, und
wobei der hintere Plattenabschnitt (142) eine Stützstruktur (142a) mit einer I-förmigen Trägerform aufweist, die sich von einem sich in horizontaler Richtung erstreckenden Körper in einer unteren Richtung erstreckt, um mit der oberen Oberfläche der Grundplatte (120) gekoppelt zu werden, und eine untere Oberfläche des hinteren Abdeckungsabschnitts (141) und eine untere Oberfläche der Stützstruktur des hinteren Plattenabschnitts (142) auf derselben Ebene liegen.

11. Batteriepack (100) nach Anspruch 7,
wobei der erste Kältemittelkanal kein separates Rohr enthält, und wenn der erste Seitenrahmen (150) stranggepresst wird, durch Erstreckung in einer röhrenförmigen Form in der Vorwärts-Rückwärts-Richtung gebildet wird.

12. Batteriepack (100) nach Anspruch 7, wobei ein von einem hinteren Ende des ersten Kältemittelkanals des ersten Seitenrahmens (150) eingespritztes Kältemittel sich entlang des ersten Kältemittelkanals nach hinten bewegt und das Kältemittel durch das erste Verbindungsloch (151) zur Kühleinheit (180) bewegt.

13. Elektronische Vorrichtung, umfassend mindestens einen Batteriepack (100) nach einem der Ansprüche 1 bis 12.

14. Fahrzeug, umfassend mindestens einen Batteriepack (100) nach einem der Ansprüche 1 bis 12.

## Revendications

1. Un bloc-batterie (100) comprenant :
une pluralité de modules de batterie (110) ;
une plaque de base (120) sur laquelle la pluralité de modules de batterie (110) est située;
un cadre avant (130B) comprenant une partie de couvercle avant (131) recouvrant un avant de la plaque de base (120) et une partie de plaque avant (132) s'étendant vers l'arrière depuis un côté de la partie de couvercle avant (131), dans lequel la partie de couvercle avant (131) et la partie de plaque avant (132) sont formées d'un seul bloc ;
un cadre arrière (140B) ayant une partie de couvercle arrière (141) recouvrant un arrière de la plaque de base (120), et une partie de plaque arrière (142) s'étendant vers l'avant depuis un côté de la partie de couvercle arrière (141), dans lequel la partie de couvercle arrière (141) et la partie de plaque arrière (142) sont formées d'un seul bloc ;
un premier cadre latéral (150) recouvrant un côté gauche de la plaque de base (120) ; et
un second cadre latéral (160) recouvrant un côté droit de la plaque de base (120),
dans lequel le cadre avant (130B) comprend en outre une première saillie (133) ayant une partie supérieure faisant relativement plus saillie vers l'avant qu'une partie inférieure sur une surface avant de la partie de couvercle avant (131), et
dans lequel le cadre arrière (140B) comprend en outre une seconde saillie (143) ayant une partie supérieure faisant relativement plus saillie vers l'arrière qu'une partie inférieure sur une surface arrière de la partie de couvercle arrière (141).

2. Le bloc-batterie (100) selon la revendication 1,
dans lequel le cadre avant (130B) comprend au moins une nervure de renforcement (R1) située pour faire face à un espace entre la pluralité de modules de batterie (110) et s'étendant de la partie de plaque avant (132) à la partie de couvercle avant (131), et
dans lequel le cadre arrière (140B) comprend au moins une nervure de renforcement (R1) située pour faire face à un espace entre la pluralité de modules de batterie (110) et s'étendant de la partie de plaque arrière (142) à la partie de couvercle arrière (141).

3. Le bloc-batterie (100) selon la revendication 1,
dans lequel une première structure en escalier (D1) dont la hauteur est réduite pas à pas dans une direction d'extrémité est formée sur les deux extrémités de la partie de couvercle avant (131) dans une direction gauche-droite, et
dans lequel une seconde structure en escalier (D2) dont la hauteur est réduite pas à pas dans une direction extérieure par rapport à un centre du bloc-batterie est formée sur les extrémités avant et arrière de chacun du premier cadre latéral (150) et du second cadre latéral (160) de manière à être couplée avec la première structure en escalier (D1) de la partie de couvercle avant (131).

4. Le bloc-batterie (100) selon l'une quelconque des revendications 1 à 3,
dans lequel la partie de couvercle avant (131) du cadre avant (130B) comprend une pluralité de nervures horizontales (R2) ayant chacune une forme de plaque faisant saillie vers l'avant depuis l'avant et s'étendant dans une direction gauche-droite et agencée dans une direction haut-bas, et
dans lequel, parmi la pluralité de nervures horizontales (R2), la nervure horizontale située sur une partie inférieure est configurée pour avoir une longueur de saillie vers l'avant relativement plus petite que la nervure horizontale située sur une partie supérieure.

5. Le bloc-batterie (100) selon la revendication 1, comprenant en outre : un système de gestion de batterie, BMS (172),
dans lequel la partie de couvercle avant (131) ou la partie de couvercle arrière (141) comprend un espace de logement (S) logeant au moins une partie du BMS (172).

6. Le bloc-batterie (100) selon la revendication 1, comprenant en outre : une unité de refroidissement (180) comprenant un passage de réfrigérant configuré pour permettre à un réfrigérant de se déplacer, un trou d'injection (182) configuré pour permettre l'injection du réfrigérant dans le passage de réfrigérant, et un trou de décharge (183) configuré pour permettre la décharge du réfrigérant hors du passage de réfrigérant.

7. Le bloc-batterie (100) selon la revendication 6,
dans lequel le premier cadre latéral (150) comprend un premier trou de connexion (151) connecté en communication avec le trou d'injection (182), et un premier passage de réfrigérant connecté en communication avec le premier trou de connexion (151) et s'étendant dans une direction avant-arrière le long d'un corps du premier cadre latéral (150), et
dans lequel le second cadre latéral (160) comprend un second trou de connexion (161) connecté en communication avec le trou de décharge (183), et un second passage de réfrigérant connecté en communication avec le second trou de connexion (161) et s'étendant dans la direction avant-arrière le long d'un corps du second cadre latéral (160).

8. Le bloc-batterie (100) selon la revendication 1,
dans lequel la première saillie (133) est située sur une partie inférieure de la surface avant de la partie de couvercle avant (131) par rapport à un centre et a une forme faisant saillie vers l'avant depuis la surface avant.

9. Le bloc-batterie (100) selon la revendication 1,
dans lequel la seconde saillie (143) est située sur une partie inférieure d'une surface arrière de la partie de couvercle arrière (141) par rapport à un centre et a une forme qui fait saillie vers l'arrière plus que la surface arrière de la partie de couvercle arrière (141).

10. Le bloc-batterie (100) selon la revendication 1,
dans lequel la partie de plaque avant (132) inclut une structure de support (132a) ayant une forme de poutre en I s'étendant dans une direction inférieure depuis un corps s'étendant dans une direction horizontale de manière à être couplée à une surface supérieure de la plaque de base (120), et une surface inférieure de la partie de couvercle avant (131) et une surface inférieure de la structure de support de la partie de plaque avant (132) sont sur le même plan, et
dans lequel la partie de plaque arrière (142) inclut une structure de support (142a) ayant une forme de poutre en I s'étendant dans une direction inférieure depuis un corps s'étendant dans la direction horizontale de manière à être couplée à la surface supérieure de la plaque de base (120), et une surface inférieure de la partie de couvercle arrière (141) et une surface inférieure de la structure de support de la partie de plaque arrière (142) sont sur le même plan.

11. Le bloc-batterie (100) selon la revendication 7,
dans lequel le premier passage de réfrigérant n'inclut pas de tube séparé, et lorsque le premier cadre latéral (150) est moulé par extrusion, est formé en s'étendant sous une forme tubulaire dans la direction avant-arrière.

12. Le bloc-batterie (100) selon la revendication 7, dans lequel un réfrigérant injecté depuis une extrémité arrière du premier passage de réfrigérant du premier cadre latéral (150) se déplace vers l'arrière le long du premier passage de réfrigérant, et déplace le réfrigérant vers l'unité de refroidissement (180) à travers le premier trou de connexion (151).

13. Un dispositif électronique comprenant au moins un bloc-batterie (100) selon l'une quelconque des revendications 1 à 12.

14. Un véhicule comprenant au moins un bloc-batterie (100) selon l'une quelconque des revendications 1 à 12.
